# EUROPÄISCHE PATENTSCHRIFT

(11) **EP 3 717 875 B1**
(45) Veröffentlichungstag und Bekanntmachung des Hinweises auf die Patenterteilung: **12.04.2023**
(21) Anmeldenummer: 18803413.6
(22) Anmeldetag: 13.11.2018
(51) Int. Cl.: G01D 21/00, G01F 15/00, G01F 15/02, G01F 23/80, G08C 17/02, G08C 19/00

(54) **SENSORANORDNUNG ZUR ANORDNUNG AN EINER PROZESSANLAGE**
SENSOR ARRANGEMENT FOR A PROCESS INSTALLATION
DISPOSITIF DE DÉTECTION POUR UNE INSTALLATION DE TRAITEMENT

(30) Priorität: 01.12.2017 DE 102017128566
(43) Veröffentlichungstag der Anmeldung: 07.10.2020
(73) Patentinhaber: Endress+Hauser Flowtec AG, 4153 Reinach (CH)
(72) Erfinder: WILHELM, Thomas, 09113 Chemnitz (DE); FINK, Nikolai, 4147 Aesch (CH); DRAHM, Wolfgang, 85435 Erding (DE); RIEDER, Alfred, 84032 Landshut (DE); KLÖFER, Peter, 79585 Steinen (DE); MOORE, Thomas, 07751 Jena-Drackendorf (DE)
(74) Vertreter: Penner, Paul
(86) Internationale Anmeldenummer: PCT/EP2018/081051
(87) Internationale Veröffentlichungsnummer: WO 2019/105731

(56) Entgegenhaltungen:
- DE-A1-102012 104 025
- US-A1- 2008 163 700
- Daniel-Ioan Curiac ET AL: "Redundancy and Its Applications in Wireless Sensor Networks: A Survey", WSEAS TRANSACTIONS on COMPUTERS (Issue 4, Volume 8, April 2009), 1. April 2009 (2009-04-01), Seiten 705-714, XP055570627, Gefunden im Internet: URL:http://www.wseas.us/e-library/transact ions/computers/2009/29-149.pdf [gefunden am 2019-03-18]
- C. FISCHIONE ET AL: "Distributed cooperative processing and control over wireless sensor networks", INTERNATIONAL WIRELESS COMMUNICATIONS AND MOBILE COMPUTING CONFERENCE : IWCMC 2006; JULY 3 - 6, 2006, VANCOUVER, BRITISH COLUMBIA, CANADA, 1. Januar 2006 (2006-01-01), Seite 1311, XP055571709, 2 Penn Plaza, Suite 701 New York NY 10121-0701 USA DOI: 10.1145/1143549.1143813 ISBN: 978-1-59593-306-5
- Wikipedia: "Wireless sensor network", Wikipedia, 28. November 2017 (2017-11-28), XP055569894, Gefunden im Internet: URL:https://en.wikipedia.org/w/index.php?t itle=Wireless_sensor_network&oldid=8125778 76 [gefunden am 2019-03-15]

## Beschreibung

Die vorliegende Erfindung betrifft eine Sensoranordnung nach dem Oberbegriff des Anspruchs 1, sowie ein Verfahren zu deren Betrieb und eine Prozessanlage.

Es sind einzelne Messgeräte, z.B. Coriolismessgeräte, bekannt, welche zum Zwecke eines Signalabgleichs von Sensorparametern miteinander kommunizieren. Eine derartige Form der Kommunikation zweier Messgeräte untereinander ist u.a. aus der WO 2017/143576 A1 bekannt.

Eine Funktionsverteilung von Sensoren in einer Prozessanlage ist aus der DE 10 2007 024 006 A1 bekannt. Diese Sensoren kommunizieren allerdings stets über eine zentrale Auswerteeinheit.

Die US 2008/163700 A1 beschreibt eine Sensoranordnung gemäß dem Stand der Technik zur Anordnung an einer Prozessanlage mit mehreren Messstellen, umfassend eine Mehrzahl an Sensorkacheln, wobei jeweils eine Sensorkachel einen lokal an der Prozessanlage anordenbaren Trägerkörper und mehrere auf dem Trägerkörper angeordnete Sensoren zur Ermittlung unterschiedlicher Kennwerte aufweist.

Die vorliegende Erfindung setzt ausgehend von diesem Stand der Technik bei der Aufgabe an eine Sensoranordnung mit Sensorbaugruppen, sogenannten Sensorkacheln, zu schaffen, welche miteinander kommunizieren, wobei zum Erhalt einer Gesamtinformation auch der aktuelle Zustand einer Baugruppe und deren Position in einer Prozessanlage berücksichtigt wird.

Die vorliegende Erfindung löst diese Aufgabe durch eine Sensoranordnung mit den Merkmalen des Anspruchs 1.

Eine erfindungsgemäße Sensoranordnung zur Anordnung an einer Prozessanlage mit mehreren Messstellen umfasst im Unterschied zum vorgenannten Stand der Technik eine Mehrzahl an Sensorkacheln.

Als Sensorkachel im Sinne der Erfindung ein lokal an der Prozessanlage anordenbarer Trägerkörper zu verstehen, welcher mehrere auf dem Trägerkörper angeordnete Sensoren aufweist, welche zur Ermittlung physikalischen oder chemischen Größe eines Messmediums und/oder einer Prozesseigenschaft eines in der Prozessanlage befindlichen Messmediums und/oder eines Zustands der Prozessanlage dienen.

Eine physikalische oder chemische Größe kann beispielsweise der pH-Wert, die Wärmeleitfähigkeit, die Schallleitfähigkeit, die Dichte, die Viskosität, der Stoffmengenanteil einer oder mehrerer Komponenten des Messmediums und dergleichen sein.

Eine Prozesseigenschaft eines in der Prozessanlage befindlichen Messmediums kann die Temperatur, der Druck, die Fließgeschwindigkeit, der Volumen- und/oder Massedurchfluss und dergleichen sein.

Ein Zustand einer Prozessanlage kann z.B. befüllt, teilbefüllt oder entleert bedeuten. Weitere Zustände sind z.B. ob das Medium in Bewegung ist oder nicht, beispielsweise durch einen Einsatz einer Mischvorrichtung, was u.a. durch Vibrationen ermittelbar ist. Auch Zustände ob die Prozessanlage bei der Verarbeitung innerhalb der Spezifikation arbeitet, z.B. bereichsweise auftretende Vibrationen, Druckschläge oder dergleichen, können sensorisch erfasst werden.

Als Sensoren besonders bevorzugt sind einfache kostengünstige Sensoren, z.B. sind beispielsweise Neigungs- und/oder Oszillationssensoren, insbesondere auf Basis eines Kreiselsensors bzw. Gyroskops, Temperatursensoren und/oder akustische Sensoren, insbesondere Schallsensoren, sowie Luftfeuchtesensoren, Näherungssensoren und/oder Beschleunigungssensoren. Auch physikalisch-chemische Sensoren z.B. optochemische Sensoren oder elektrochemische Sensoren, insbesondere in Verwendung sehr günstiger Elektroden, wie z.B. Edelstahl- oder Graphit-Elektroden, können für die Sensoranordnung genutzt werden. Weitere kostengünstige Sensoren sind z.B. optische Sensoren, wie z.B. Trübungssensoren. Auch thermische Durchflusssensoren können in MEMS-Bauweise sehr kostengünstig hergestellt werden. Aus der DE 10 2012 102 979 A1 ist eine Variante eines Magnetisch-induktiven Durchflussmessgerätes bekannt, welche ebenfalls in kostengünstiger Weise herstellbar ist.

Bevorzugt sind jedoch sämtliche Sensoren der Sensorkacheln als MEMS-Bauteile ausgebildet.

Eine erste Sensorkachel der vorgenannten Sensorkacheln weist eine erste Steuer- und/oder Auswerteeinheit auf mit zumindest einem Sende- und Empfangsmodul zum Datenaustausch mit einer ersten Steuer- und/oder Auswerteeinheit einer zweiten Sensorkachel. Weitere Bauteile der Steuer- und/oder Auswerteeinheit können beispielsweise ein Rechenwerk, insbesondere eine CPU, und ein Datenspeicher sein.

Erfindungsgemäß erfolgt ein Datenaustausch zwischen der ersten und zweiten Sensorkachel, vorzugsweise jedoch zwischen allen Sensorkacheln der Sensoranordnung.

Die erste Steuer- und/oder Auswerteeinheit der ersten Sensorkachel ist ausgebildet zur Ermittlung der physikalischen oder chemischen Größe des Messmediums und/oder der Prozesseigenschaft des in der Prozessanlage befindlichen Messmediums.

Bei der Ermittlung erfolgt u.a. eine Gewichtung der durch jede Sensorkachel ermittelten Werte.

Die Gewichtung der Werte, also der Messwerte oder die daraus berechnete physikalische und/oder chemische Größe des Messmediums und/oder die Prozesseigenschaft und/oder des Zustands der Prozessanlage kann in Abhängigkeit von
a) der Messwertschwankungen zumindest eines Sensors einer Sensorkachel;
b) der Position der Sensorkachel in der Prozessanlage
   und/oder
c) der Funktion (kontinuierliche oder zeitweilig abgeschaltete Messung) der Sensorkachel erfolgen.

Bei den Messwertschwankungen können u.a. Ausreißer unberücksichtigt bleiben. Unterliegt ein Sensor hohen Messwertschwankungen, so wird für die Werte dieses Sensors eher eine geringe Gewichtung angesetzt.

Ein weiterer Faktor der Gewichtung ist die Position der Sensorkachel in der Prozessanlage. So können Sensorkacheln im ersten und letzten fünften der Prozessanlage, also Werte von einlauf- oder auslaufseitig angeordneten Sensorkachel eine höhere Gewichtung aufweisen. Bei Mischphasen in einem Behälter oder teilgefüllten Behältern kann die Gewichtung der Sensoren im Bereich der Phasengrenze oder Phasengrenzen besonders hoch sein, während die Gewichtung z.B. auf Höhe einer reinen Flüssig oder Gasphase wesentlich geringer sein kann.

Ein dritter Faktor der Gewichtung ist die Funktion der Sensorkachel. Handelt es sich bei den Sensoren der Sensorkachel um kontinuierlich messende Sensoren, welche bereits auf die Prozessbedingungen abgestimmt sind. Die zur Messung zeitweilig zugeschalteten Sensorkacheln hingegen unterliegen meist einer gewissen Ungenauigkeit, bis sie stabile Messwerte liefern. Im Ergebnis können geht die Funktion der Sensorkachel, kontinuierlich messend oder zeitweilig abgeschaltet, in die Gewichtung ein.

Die Gewichtung ist vorzugsweise adaptiv. Bei Ausfall oder zunehmender Alterung eines oder mehrerer Sensoren erfolgt eine Anpassung der Gewichtung und die ermittelten Werte der Sensorkachel gehen mit einem geringeren Gewicht, da sie stärker fehlerbehaftet sind, in die Berechnung ein.

Aufgrund der zwischen den Sensoren erfolgte Kommunikation und der Abgleich der Messdaten bei unterschiedlicher Gewichtung kann sich eine Schwarmintelligenz der Sensoranordnung ausbilden, welche beispielsweise auch bei Ausfall einer zentralen Steuer- und/oder Auswerteeinheit weiterhin funktioniert.

Weitere vorteilhafte Ausgestaltungen der Erfindung sind Gegenstand der Unteransprüche.

Es ist von Vorteil, wenn jede der Sensorkacheln eine Steuer- und/oder Auswerteeinheit mit zumindest einem Sende- und Empfangsmodul aufweist zum Datenaustausch den Steuer- und/oder Auswerteeinheiten der anderen Sensorkachel der Sensoranordnung. Somit wird eine Kommunikation aller Sensorkacheln untereinander sichergestellt.

Mehrere unterschiedliche Sensoren können auf der Sensorkachel vorgesehen sein, welche zur Ermittlung unterschiedlicher physikalischer oder chemischer Größe des Messmediums und/oder unterschiedlicher Prozesseigenschaft des in der Prozessanlage befindlichen Messmediums. Beispielsweise kann ein Temperatursensor und ein Neigungssensor, welcher zudem Oszillation und somit die Viskosität bestimmen kann, auf einer Sensorkachel angeordnet sein.

Es ist auch möglich und vorteilhaft wenn mehrere artgleiche Sensoren auf einer Sensorkachel in einem Sensorfeld in Strömungsrichtung oder Einfüllrichtung des Messmediums hintereinander angeordnet sind. Dadurch kann eine Trendprognose für die nachfolgende Messstelle in der Prozessanlage ermittelt werden und/oder eine Überwachungsfunktion der Sensorkachel realisiert werden.

Die erste Sensorkachel weist erfindungsgemäß zumindest drei Betriebszustände auf,
wobei ein erster Betriebszustand der Überwachung hinsichtlich der Änderung der physikalischen oder chemischen Größe des Messmediums und/oder der Prozesseigenschaft des in der Prozessanlage befindlichen Messmediums und/oder des Zustands der Prozessanlage dient und
wobei ein zweiter Betriebszustand der Ermittlung der physikalischen oder chemischen Größe des Messmediums und/oder der Prozesseigenschaft des in der Prozessanlage befindlichen Messmediums und/oder des Zustands der Prozessanlage dient.

Zusätzlich kann vorgesehen sein, dass ein weiterer Betriebszustand der Regelung und/oder Steuerung von einem oder mehreren Stellmitteln, z.B. einem Ventil und/oder einer Pumpe, der Prozessanlage dient, wobei die Regelung durch die Steuer- und/oder Auswerteeinheit der ersten Sensorkachel erfolgt.

Zusätzlich können einzelne oder alle Sensorkachel zusätzlich zu den vorgenannten Betriebszuständen noch weitere Betriebszustände aufweisen, Erfindungsgemäß ist ein weiterer Betriebszustand vorgesehen, in welchem die Steuer- und/oder Auswerteeinheit die Daten mehrerer Sensorkacheln empfängt und verarbeitet. Diese Sensorkachel kann sich z.B. an einer Position der Prozessanlage befinden, in welchem es nur zu geringen Messwertschwankungen, kommt, so dass Rechenkapazitäten der Steuer und/oder Auswerteeinheit der Sensorkachel optimal genutzt werden.

In einem weiteren Betriebszustand kann die Sensorkachel auf stand-by gesetzt werden, sofern kein Signal zum Umschalten in den Messbetrieb empfangen wird.

Das Umschalten zwischen den vorgenannten oder weiteren Betriebszuständen erfolgt erfindungsgemäß durch eine Zuweisung einer Messfunktion, einer Auswertefunktion der Messwerte mehrerer Sensorkacheln, und einer Überwachungsfunktion einer Zustandsänderung zum Hochfahren anderer Sensoren aus dem stand-by Modus durch die Sensoranordnung selbst. Beispielsweise wird die Höhe des Füllstands detektiert und einer Sensorkachel nahe der Phasengrenze die Überwachungsfunktion zugewiesen.

Die Zuweisung einer Funktion einer Sensorkachel kann durch die Sensoranordnung im laufenden Betrieb der Prozessanlage geändert werden. So können die Funktionen bei sinkendem Füllstand in einem Tank in Abhängigkeit des aktuellen Füllstands variieren.

Die Steuer- und/oder Auswerteeinheit der ersten Sensorkachel kann anhand der durch ihre Sensoren ermittelten Messwerte für die physikalischen oder chemischen Größe des Messmediums und/oder die Prozesseigenschaft des in der Prozessanlage befindlichen Messmediums und/oder des Zustands der Prozessanlage an einer Messstelle der ersten Sensorkachel und unter Berücksichtigung der Geometrie der Prozessanlage einen prognostizierten Wert für die physikalischen oder chemischen Größe des Messmediums und/oder der Prozesseigenschaft des in der Prozessanlage befindlichen Messmediums und/oder des Zustands der Prozessanlage an einer Messstelle einer zweiten Sensorkachel der Sensoranordnung, insbesondere einer benachbarten Sensorkachel, errechnen.

Dieser prognostizierte Wert kann mit dem durch die zweite Sensorkachel ermittelten Wert verglichen werden und es kann eine Gewichtung anhand dieses Vergleiches erfolgen und/oder ein Ergebnis zur Plausibilität des ermittelten Wertes ausgegeben werden.

Anhand der ermittelte Werte der physikalischen oder chemischen Größe des Messmediums und/oder der Prozesseigenschaft des in der Prozessanlage befindlichen Messmediums und/oder der Zustand der Prozessanlage kann vorteilhaft ein Gesamtwert dieser Größe und/oder dieser Prozesseigenschaft für die Prozessanlage und/oder des Zustands der Prozessanlage ausgegeben werden, wobei die Messwerte der Sensorkacheln individuell gewichtet bei der Berechnung berücksichtigt werden. Eine Sensorkachel kann dabei die Gesamtzahl aller Werte an eine übergeordnete Steuer- und/oder Auswerteeinheit, also der zweiten zentralen Steuer- und/oder Auswerteeinheit, übermitteln zur Auswertung und Ausgabe eines Zustands oder einer Größe oder Prozesseigenschaft oder der Mediumsgröße. Zusätzlich zu dem Gesamtwert kann eine Unsicherheitsangabe ausgegeben werden, welche den Zustand der Sensoranordnung berücksichtigt. Die Unsicherheitsangabe kann beispielsweise erhöht werden mit dem Umfang an ausgefallenen Sensoren einer oder mehrerer Sensorkacheln. Die Messfunktionen können dann zwar trotzdem durch Ermittlung von Sekundärgrößen gewährleistet werden, jedoch mit höherer Unsicherheit.

Die erste Sensorkachel, insbesondere alle Sensorkacheln der Sensoranordnung, können zudem einen Datenspeicher aufweisen auf welchem Datensätze zu den aktuellen Sensoreinstellungen benachbarter Sensorkacheln abgelegt sind.

Die Funktionszuweisung einer jeweiligen Sensorkachel erfolgt erfindungsgemäß anhand der Position der Sensorkachel in der Prozessanlage, in Abhängigkeit von der Häufigkeit der Zustandsänderung der Prozessanlage an der Position vorzugsweise bei Ermittlung des Füllstands, der Temperatur des Messmediums und/oder des Durchflusses.

Die Messwerte von Sensoren zur Ermittlung unterschiedlicher Messgrößen auf einer Sensorkachel können in Abhängigkeit von der Position und der zu ermittelnden Messgröße unterschiedlich gewichtet werden. So kann z.B. ja nach geändertem Betriebszustand oder geänderter Funktion die Gewichtung der Messdaten einzelner Sensoren höher oder niedriger ausfallen. Befindet sich beispielsweise in einem teilgefüllten Tank die Sensorkachel unterhalb der Phasengrenze, so kann ein Sensor zur Leitfähigkeitsmessung eine höhere Gewichtung erhalten. Wird der Tank im Produktionsbetrieb jedoch weiter entleert, so dass die Sensorkachel nun oberhalb der Phasengrenze ist, so können die Messdaten eines Sensors für Druckmessung eine höhere Gewichtung erhalten als zuvor.

Die Gewichtung der Position der Sensorkachel in der Prozessanlage, kann insbesondere in Abhängigkeit vom Zustand der Prozessanlage z.B. dem Füllstand und/oder der Temperator des Mediums erfolgen. An einer Phasengrenze kann die Gewichtung der Werte der Sensorkacheln beispielsweise deutlich höher ausfallen. Dies kann auch durch einen Temperatursprung (Phasenübergang gasförmig-flüssig) deutlich werden.

Vorteilhaft löst die Sensorgesamtheit oder eine Teilgesamtheit löst Steuerereignisse aus, beispielsweise die Steuerung einer Pumpe oder eines Ventils.

Es ist auch möglich, dass eine oder mehrere Sensorkacheln einen Steuerbefehl einer übergeordneten Steuer- und/oder Auswerteeinheit außer Kraft setzen. Kommt es z.B. zu einer Ausnahmesituation wird es dadurch der Prozessanlage ermöglicht schneller auf diese Ausnahmesituation zu reagieren.

In einer bevorzugten Ausführungsvariante kann die Gewichtung individuell nach dem zu ermittelnden Wert (z.B. Temperatur oder Druck) und Position der Sensorkachel zur Ermittlung dieser Einzelgröße erfolgen. So ist es möglich, dass zur Druckermittlung eine erste Sensorkachel aufgrund ihrer Position besonders hoch gewichtet wird und zur Temperaturermittlung eine zweite Sensorkachel aufgrund ihrer Position besonders hoch gewichtet wird. z.B. hohe Gewichtung für Füllstand bei Grenzfläche, für Druck in der Gasphase, für Strömungsgeschwindigkeit in der Nähe eines Ein- und/oder Auslasses.

Die Gewichtung der Position je nach Parameter kann somit unterschiedlich sein und kann sich auch im Prozess ändern, z.B. bei Änderung der Füllhöhe.

Die Gesamtheit entscheidet, ob die übergeordnete Steuereinheit außer Kraft gesetzt wird. Insgesamt weist die erfindungsgemäße Sensoranordnung eine Selbstverwaltung, z.B. bei der Gewichtung und der Funktionszuordnung, auf.

Weiterhin erfindungsgemäß ist eine Prozessanlage mit der vorgenannten Sensoranordnung. Vorteilhafte Ausgestaltungen der Prozessanlage sind Gegenstand der Unteransprüche.

Die Prozessanlage kann zusätzlich zu der Sensoranordnung einen oder mehrere weitere Sensoren enthalten, wobei ein Datenaustausch zwischen der Sensoranordnung und diesen weiteren Sensoren erfolgt, so dass auch die Messdaten dieser Sensoren beispielsweise bei der Auswertung, Steuerung und Selbstverwaltung der Sensoranordnung berücksichtigt werden können.

Weiterhin vorteilhaft kann die Prozessanlage eines oder mehrere Stellmittel aufweisen, wobei ein Datenaustausch hinsichtlich des Zustands des einen oder der mehreren Stellmittel mit der Sensoranordnung erfolgt, so dass in Abhängigkeit der ausgetauschten Daten eine Steuerung der Stellmittel erfolgen kann. Als Stellmittel sind z.B. Ventile, Pumpen, Heizelemente, usw. anzusehen. Beispielsweise wenn eine Pumpe heiß läuft, so stellt diese Pumpe diesbezüglich ein Signal zur Verfügung, welches durch die Sensoranordnung abrufbar ist, wobei die Sensoranordnung durch Steuerung und/oder Regelung von Ventilen oder dergleichen durch die Sensorkacheln reagiert.

Nachfolgend wird die Erfindung im Detail anhand eines Ausführungsbeispiels und unter Zuhilfenahme der beiliegenden Figur näher erläutert. Es zeigen:
- Fig. 1: schematischer Aufbau einer Prozessanlage mit einer Sensoranordnung umfassend mehrere Sensorkacheln; und
- Fig. 2: eine Sensorkachel.

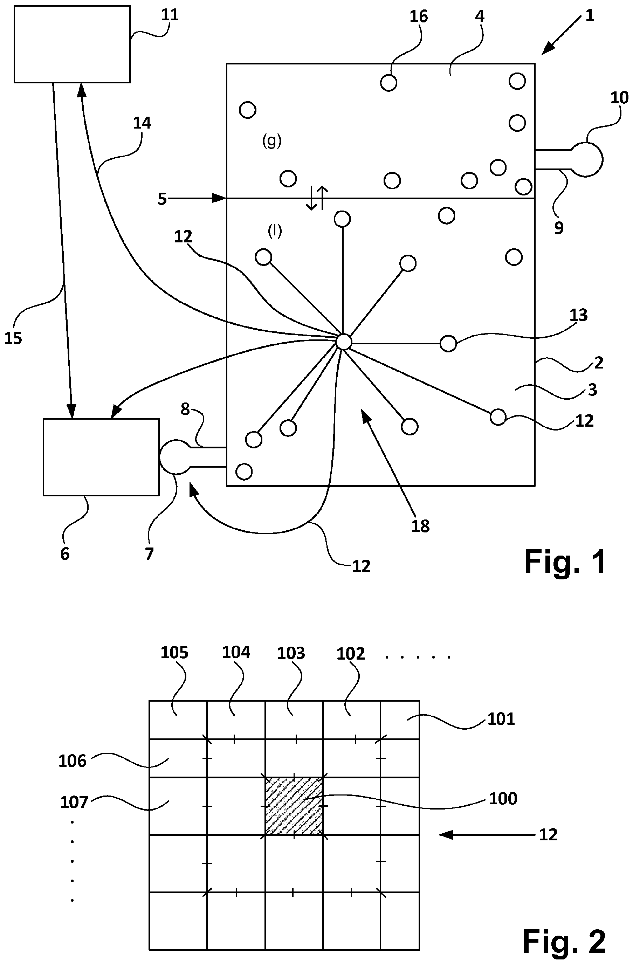

Fig. 1 zeigt lediglich exemplarisch eine Prozessanlage 1 in Form eines Tanks. Die Prozessanlage ist mit einem ersten flüssigen Medium 3 befüllt und weist im oberen Bereich ein zweites gasförmiges Medium 4, z.B. Luft oder Inertgas, auf. Entsprechend ist eine flüssiggasförmig-Phasengrenze 5 dargestellt. Weiterhin weist die Prozessanlage 1 eine Pumpe 6 am Auslass 8 des Tanks auf, welcher über ein Ventil 7 geöffnet, teilgeöffnet oder verschlossen werden kann.

Die Prozessanlage 1 weist zudem einen Einlass 9 auf, wobei der Zulauf an ersten und/oder zweiten Medium ebenfalls über ein Ventil 10 steuer- und/oder regelbar ist.

Die Steuerung und/oder Regelung des Zulaufs, des Ablaufs, der Temperatur, der Verweilzeit und dergleichen kann durch eine übergeordnete Steuer- und/oder Auswerteeinheit 11, welche nachfolgend auch als zweite Steuer- und/oder Auswerteeinheit bezeichnet wird, angesteuert werden

Entlang der Prozessanlage 1 ist eine Sensoranordnung 18 als Netzwerk aus Sensorkacheln 12 mit einer Mehrzahl von Sensoren 101-107 zur Ermittlung unterschiedlicher Kennwerte angeordnet. Dabei kann es sich um Sensoren der Mikro-Elektromechanik (MEMS-Sensoren) handeln.

Bevorzugte Sensoren 101-107 sind beispielsweise Neigungs- und/oder Oszillationssensoren, insbesondere auf Basis eines Kreiselsensors bzw. Gyroskops, Temperatursensoren und/oder akustische Sensoren, insbesondere Schallsensoren, sowie Luftfeuchtesensoren, Näherungssensoren und/oder Beschleunigungssensoren.

Auch physikalisch-chemische Sensoren z.B. optisch-chemische Sensoren und/oder elektrochemische Sensoren, insbesondere in Verwendung sehr günstiger Elektroden, wie z.B. Edelstahl- oder Graphit-Elektroden, können für die Sensorkachel verwandt werden.

Auch sogenannte Air-quality Sensoren sind bevorzugte Sensoren im Rahmen der vorliegenden Erfindung.

Die Sensoren 101-107 werden in einem vorgefertigten Mustern auf einem Trägerkörper der Sensorkachel angeordnet. Weiterhin können Sende- und/oder Empfangsmodule auf der Sensorkachel angeordnet sein.

Die Gesamtheit aus Trägerkörper mit mehreren Sensoren 101-107 zur Detektion von zumindest drei unterschiedlichen physikalischen und/oder chemischen Größen wird nachfolgend auch als Sensor-Kachel 12 bezeichnet.

Weiterhin kann auf der Sensorkachel 12 eine Steuer- und/oder Auswerteeinheit 100 angeordnet sein, welche nachfolgend auch als erste Steuer- und/oder Auswerteeinheit bezeichnet wird. Die Sensoren 101-107 können direkt oder über weitere Sensoren der Sensorkachel mit der ersten Steuer- und/oder Auswerteeinheit verbunden sein, wie dies u.a. in Fig. 2 dargestellt ist.

Die mehrere Sensorkacheln 12, insbesondere mehrere Sensorkacheln 12 mit gleichem topologischen Aufbau, sind an unterschiedlichen Orten entlang einer Rohrleitung und/oder einem Tank positioniert.

Die Messdaten der Mehrzahl an Sensorkacheln kann in einem Gesamterfassungssystem, z.B. durch die Steuer- und/oder Auswerteeinheit 11, erfasst und verwaltet werden. Wahlweise können auch durch die Teilgesamtheit konsolidierte Daten, insbesondere auch gewichtete Daten, der gesamten Sensoranordnung von einer Sensorkachel an die übergeordnete Steuer und/oder Auswerteeinheit weitergeleitet werden.

Das Gesamterfassungssystem ermöglicht zudem eine Verteilung der Sensorkacheln und/oder der einzelnen Sensoren nach Priorität und Gewichtung.

So kann beispielsweise je nach Position der Sensorkacheln eine unterschiedliche Gewichtung der ermittelten Messwerte durch die Sensoren der jeweiligen Sensorkachel erfolgen.

Die Datenübertragung zwischen den Sensorkacheln und/oder zwischen einer Sensorkachel 12 und der zweiten Steuer- und/oder Auswerteeinheit kann wireless, z.B. durch Funk oder mittels Kabel erfolgen. Ein Signalpfad 13 zwischen zwei Sensorkacheln 12 und ein Signalpfad 14 zwischen einer Sensorkachel 12 und der zweiten Steuer- und/oder Auswerteeinheit 11 ist in Fig. 1 dargestellt.

Die zweite Steuer- und/oder Auswerteeinheit 11 kann zur Übermittlung von Steuerbefehlen bzw. zur Koordinierung von Steuerereignissen mit der Pumpe 6 oder ggf. auch mit den Ventilen 7 und 10 über einen oder mehrere Signalpfade 15 kommunizieren.

Allerdings kann auch eine einzelne oder mehrere Sensorkacheln 12 über einen Signalpfad 17 mit den vorgenannten Bauelementen kommunizieren.

Weiterhin kann die Prozessanlage auch Sensoren, wie z.B. den Drucksensor 16, aufweisen, welche nicht der Sensoranordnung 18 zugeordnet ist.

Beispielsweise weisen Sensormessdaten an der Einlassseite und der Auslassseite eines Rohrleitungssystems eine höhere Gewichtung auf als Sensormessdaten in der Mitte des Tanks.

Die Sensor-Kachel kann zudem vorzugsweise ein Array, also eine Abfolge aus mehreren gleichartigen Sensoren die, z.B. in Strömungsrichtung, hintereinander auf dem Trägerkörper der Sensorkachel 12 angeordnet sind, beispielsweise Temperatursensoren, aufweisen welche in einer vorbestimmten Richtung hintereinander angeordnet sind, um dadurch ein lokales Trendverhalten, z.B. einen Temperaturanstieg, zu bestimmen.

Durch dieses lokale Trendverhalten, z.B. einen Temperatursprung, kann beispielsweise ein Mediumswechsel in einem Tank oder einer Rohrleitung bestimmt werden.

Darüber hinaus erlaubt die Messung der Varianz der Temperatur durch das Temperaturarray bei bekannter Geometrie der Prozessanlage eine Abschätzung über die Temperaturentwicklung an einem dem Sensor strömungstechnisch nachgelagerten Ort. Typischerweise kommt es bei Messung eines lokalen Temperaturanstiegs in örtlichnachgelagerten Anlageteilen aufgrund der vermehrten Vermischung zu einer Temperaturänderung.

Aufgrund des Arrays an Temperatursensoren kann nicht nur eine Strömungsgeschwindigkeit aufgrund der Zeitvarianz der einzelnen strömungstechnisch auf der Sensorkachel nacheinander angeordneten Temperatur-Sensoren z.B. am Einlauf eines Tanks ermittelt werden, sondern es kann auch eine Temperaturprognose für z.B. für die Temperaturentwicklung in der Mitte des Tanks bei Berücksichtigung der geometrischen Vorgaben ermittelt werden.

Durch Ermittlung von prognostizierten Messwerten an einer ersten Messstelle durch die Sensoren der Sensorkacheln an einer zweiten, dritten und/oder vierten Messstelle kann eine Plausibilitätsprüfung des gemessenen Messwertes an der ersten Messstelle erfolgen. Liegt der gemessene Messwert außerhalb eines Toleranzbereichs für den prognostizierten Messwert, so kann dieser gemessene Messwert unberücksichtigt bleiben.

Alternativ oder zusätzlich kann die Funktion der entsprechenden Sensorkachel modifiziert werden.

Weiterhin kann ein Zustandswert hinsichtlich des Betriebszustands der Sensorkachel ermittelt werden, welcher spezifisch jeweils für einzelne Messgrößen sein kann und der für zukünftige Funktionszuweisungen und Gewichtungen sowie Wartungsentscheidungen (z.B. Austausch einer Sensorkachel) berücksichtigt werden kann.

Im Fall von kurzzeitigen Messwert-Schwankungen eines Sensors einer Sensorkachel, sogenannten Ausreißern, kann ebenfalls eine Plausibilitätsprüfung durch die weiteren Sensoren einer Sensorkachel und/oder des Gesamtsystems erfolgen und der fehlerhafte Messwert kann bei der Ermittlung einer physikalischen und/oder chemischen Größe des Messmediums unberücksichtigt bleiben. Sofern der Messwert bei einer zeitlich nachfolgenden Messung wieder innerhalb des Toleranzbereiches liegt, so kann bei der Ermittlung der physikalischen und/oder chemischen Größe wieder berücksichtigt werden.

Ist eine Messwert-Schwankung eines gemessenen Messwertes innerhalb eines Zeitintervalls nicht aufgetreten, so werden die Messwerte dieses Sensors bei der Ermittlung der physikalischen und/oder chemischen Größe und/oder bei der Ermittlung von prognostizierten Messwerten anderer Sensoren stärker gewichtet.

Derartige Prognoseberechnungen unterliegen jedoch stets Unsicherheiten, welche bei der Gewichtung der Messdaten einer Sensorkachel berücksichtigt werden.

Weiterhin ist es möglich, dass einzelne Sensoren einer Sensorkachel, insbesondere einzelne Sensoren eines Arrays, ausfallen. Dies führt im Rahmen der vorliegenden Erfindung nicht zwingend zum Ausfall der Sensorkachel oder zu einer Nichtberücksichtigung der Messwerte der Sensorkachel, sondern die Gewichtung der Messwerte wird bei einem oder mehreren ausgefallenen Sensoren verringert.

Im Ergebnis wird aufgrund der erfolgten Gewichtungen der Sensordaten und durch die Plausibilitätsprüfungen erreicht, dass sich die Gesamtheit aller Sensoren der Sensorkacheln auf einen prognostizierten Messwert an der Messstelle und/oder auf eine physikalische und/oder chemische Größe des Messmediums einigt.

Beispielhaft erfolgt bei der Gewichtung der gemessenen und prognostizierten Messwerte eine Aufgabenverteilung innerhalb des Gesamtsystems.

Dabei übernimmt je nach Art des Sensors und Position der Sensorkachel in der Prozessanlage ein einzelner Sensor neben der Ermittlung von Messdaten eine zusätzliche Funktion. Dies kann beispielsweise eine Überwachungsfunktion sein.

Sofern dieser Sensor eine signifikante Änderung der aktuell erfassten Messwerte gegenüber zeitlich vorherhergehenden Messwerten detektiert, so können Sensoren weiterer Sensorkacheln und/oder weitere Sensoren der gleichen Sensorkachel zugeschalten werden. Dies ist energieschonend und die Störungsanfälligkeit der Sensoren nehmen ab. Die Messperformance der gesamten Sensoranordnung ist daher sehr variabel und wird durch die Mess- und Auswerteeinheit in Abhängigkeit von der zeitlichen Entwicklung der Messdaten eingestellt und verwaltet.

Darüber hinaus können Sensorkacheln an strategischen Punkten einer Prozessanlage, z.B. am Zu- und/oder Ablaufbereich der Prozessanlage. Diese können in Zusammenspiel mit Stellmitteln der Prozessanlage, z.B. Ventilen oder dergleichen, die Zulauf- und/oder Ablaufgeschwindigkeit des Messmediums aus der Prozessanlage steuern. Im Fall der Detektion besonders heißer oder korrosiver Messmedium kann dadurch bei entsprechender Messung im Einlaufbereich beispielsweise ein Nulldurchfluss und im Fall des Tanks eine Einfüllgeschwindigkeit von Null eingestellt werden, durch Regelung des Ventils anhand der Sensormessdaten der am Einlauf angeordneten Sensorkachel.

Die Funktions- und/oder Aufgabenverteilung der einzelnen Sensoren auf einer Sensorkachel oder der Sensorkacheln untereinander kann variieren, so ist es möglich, dass das Steuer- und/oder Auswerteeinheit einzelnen Sensoren neue Aufgaben und/oder Funktionen zuweist. Weist ein Sensor stark schwankende Messwerte und damit eine geringe Gewichtung auf, so kann diesem die Überwachungsfunktion entzogen werden und einem neuen Sensor zugeordnet werden.

Beispielhaft weist jede einzelne Sensorkachel einen Datenspeicher und eine Sende- und Empfangseinheit auf. Bei einem Austausch eines Sensors und/oder einer Sensorkachel erfolgt eine Datenübertragung der SensorEinstellungen zum aktuellen Zeitpunkt.

Im Falle des Austausches eines einzelnen Sensors kann es durch die Datenübertragung auf den Datenspeicher der Sensorkachel erfolgen, auf welchem der Sensor angeordnet ist.

Im Falle eines Austausches einer ganzen ersten Sensorkachel erfolgt die Datenübertragung an den Datenspeicher einer benachbarten zweiten Sensorkachel. Eine anstelle der ersten Sensorkachel neu installierte dritte Austausch-Sensorkachel empfängt nach ihrer Installation von der benachbarten zweiten Sensorkachel die Sensoreinstellungen zum aktuellen Zeitpunkt des Betriebes der ersten Sensorkachel.

Die übertragenen Sensoreinstellungen können u.a. die zusätzlichen Aufgaben und Funktionen einzelner Sensoren oder der gesamten Sensorkachel und die Gewichtung der Sensorkachel und der darauf angeordneten Sensoren beim Erfassen der physikalischen und/oder chemischen Größe des Messmediums umfassen, als auch den Messbereich in welchem die Sensoren gemessen haben. Dadurch wird die Kalibrierung und Anpassung der Sensoren an den Prozess vereinfacht und die Sensoren der dritten Sensorkachel erreichen zu einem frühen Zeitpunkt nach der Installation bereits ihre optimale Messperformance.

Beispielhaft erfolgt durch Auswertung aller Messdaten ein Ermitteln eines Gesamtzustandes der Anlage, z.B. die Anlage befindet sich in einem der folgenden Zustände:
"im optimalen Betriebszustand"
"in einem ausreichenden Toleranzbereich",
"außerhalb des zulässigen Toleranzbereichs, jedoch in stabilem Betriebszustand" und
"in destabilem Betriebszustand - Notabschaltung wird initiiert"

Im Ergebnis stellt durch die erfindungsgemäße Sensoranordnung eine Möglichkeit dar, im Prozess anfallende Messdaten zu nutzen um eine kontinuierliche Adaptierung der Messung zu erreichen, im Sinne eines selbstlernenden Systems.

## Patentansprüche

1. Sensoranordnung (18) zur Anordnung an einer Prozessanlage (1) mit mehreren Messstellen umfassend eine Mehrzahl an Sensorkacheln (12),
wobei jeweils eine Sensorkachel (12) einen lokal an der Prozessanlage (1) anordenbaren Trägerkörper und mehrere auf dem Trägerkörper angeordnete Sensoren (101-107) zur Ermittlung unterschiedlicher Kennwerte aufweist,
wobei eine erste der Sensorkacheln (12) eine erste Steuer- und/oder Auswerteeinheit (100) aufweist mit zumindest einem Sende- und Empfangsmodul zum Datenaustausch mit einer ersten Steuer- und/oder Auswerteeinheit (100) einer zweiten Sensorkachel (12),
wobei ein Datenaustausch zwischen der ersten und zweiten Sensorkachel (12) erfolgt,
wobei die erste Steuer- und/oder Auswerteeinheit (100) der ersten Sensorkachel (12) ausgelegt ist zur Ermittlung einer physikalischen oder chemischen Größe des Messmediums (3) und/oder der Prozesseigenschaft des in der Prozessanlage (1) befindlichen Messmediums (3) und/oder eines Zustands der Prozessanlage (1) durch eine Gewichtung der durch jede Sensorkachel (12) ermittelten Kennwerte,
wobei die Gewichtung in Abhängigkeit von
a) der Messwertschwankungen zumindest eines Sensors (101-107) einer Sensorkachel (12);
b) der Position der Sensorkachel (12) in der Prozessanlage (1), und/oder
c) einer Funktion der Sensorkachel (12), wobei die Funktion eine kontinuierliche oder zeitweilig abgeschaltete Messung umfasst,
erfolgt,
**dadurch gekennzeichnet, dass** die erste Sensorkachel (12) zumindest drei Betriebszustände aufweist,
wobei ein erster Betriebszustand der Überwachung hinsichtlich einer Änderung der physikalischen oder chemischen Größe des Messmediums (3) und/oder der Prozesseigenschaft des in der Prozessanlage (1) befindlichen Messmediums (3) und/oder eines Zustands der Prozessanlage (1) dient,
wobei ein zweiter Betriebszustand der Ermittlung der physikalischen oder chemischen Größe des Messmediums (3) und/oder der Prozesseigenschaft des in der Prozessanlage (1) befindlichen Messmediums (3) und/oder des Zustands der Prozessanlage (1) dient,
wobei ein dritter Betriebszustand einem Empfangen und Verarbeiten von Daten mehrerer Sensorkacheln (12) dient,
wobei das Umschalten der drei Betriebszustände durch eine Zuweisung einer Messfunktion, einer Überwachungsfunktion einer Zustandsänderung zum Hochfahren von Sensoren aus einem Stand-By Modus und einer Auswertefunktion von Messwerten mehrerer Sensorkacheln (12) der ersten Sensorkachel (12) innerhalb der Sensoranordnung (18) erfolgt,
wobei die Zuweisung der Messfunktion der Überwachungsfunktion und der Auswertefunktion der ersten Sensorkachel (12) durch die Sensoranordnung (18) im laufenden Betrieb der Prozessanlage (1) änderbar ist,
wobei die Zuweisung der Messfunktion, der Überwachungsfunktion und der Auswertefunktion anhand der Position der ersten Sensorkachel (12), in Abhängigkeit von einer Häufigkeit von Zustandsänderungen der Prozessanlage (1) an der Position der ersten Sensorkachel (12), einer Temperatur des Messmediums und/oder eines Durchflusses des Messmediums erfolgt,
wobei die Sensoranordnung eine Selbstverwaltung aufweist.

2. Sensoranordnung nach Anspruch 1, **dadurch gekennzeichnet, dass** jede der Sensorkacheln (12) eine Steuer- und/oder Auswerteeinheit (100) mit zumindest einem Sende- und Empfangsmodul aufweist zum Datenaustausch den Steuer- und/oder Auswerteeinheiten (100) der anderen Sensorkacheln (12) der Sensoranordnung (18).

3. Sensoranordnung nach Anspruch 1 oder 2, **dadurch gekennzeichnet, dass** mehrere unterschiedliche Sensoren (101-107) auf der Sensorkachel (12) vorgesehen sind, welche zur Ermittlung unterschiedlicher physikalischer oder chemischer Größen des Messmediums (3) und/oder unterschiedlicher Prozesseigenschaft des in der Prozessanlage (1) befindlichen Messmediums (3) und/oder unterschiedlicher Zustandsgrößen der Prozessanlage (1).

4. Sensoranordnung nach einem der vorhergehenden Ansprüche, **dadurch gekennzeichnet, dass** mehrere artgleiche Sensoren (101-105) auf einer Sensorkachel (12) in einem Sensorfeld in Strömungsrichtung oder Einfüllrichtung des Messmediums (3) hintereinander angeordnet sind.

5. Prozessanlage (1) mit einer Sensoranordnung (18) nach einem der Ansprüche 1 bis 4.

6. Prozessanlage (1) nach Anspruch 5, **dadurch gekennzeichnet, dass** die Prozessanlage zusätzlich zu der Sensoranordnung (18) einen oder mehrere weitere Sensoren enthält, wobei ein Datenaustausch zwischen der Sensoranordnung (18) und diesen weiteren Sensoren erfolgt.

7. Prozessanlage (1) nach einem der vorhergehenden Ansprüche 5 bis 6, **dadurch gekennzeichnet, dass** die Prozessanlage (1) Stellmittel aufweist, wobei ein Datenaustausch hinsichtlich des Zustands der Stellmittel mit der Sensoranordnung (18) erfolgt, so dass in Abhängigkeit der ausgetauschten Daten eine Steuerung der Stellmittel erfolgt.

## Claims

1. Sensor arrangement (18) designed to be arranged on a process installation (1) with multiple measuring points, comprising multiple sensor tiles (12),
wherein each sensor tile (12) has a support body that can be arranged locally on the process installation (1) and multiple sensors (101-107) arranged on the support body to determine different characteristic values,
wherein a first of the sensor tiles (12) has a first control and/or evaluation unit (100) with at least a transmission and reception module designed to exchange data with a first control and/or evaluation unit (100) of a second sensor tile (12),
wherein data exchange takes place between the first and the second sensor tile (12),
wherein the first control and/or evaluation unit (100) of the first sensor tile (12) is designed to determine a physical or chemical variable of the medium (3) and/or the process characteristic of the medium (3) located in the process installation (1) and/or a state of the process installation (1) by weighting the characteristic values determined by each sensor tile (12),
wherein the weighting is performed depending on
a) measured value fluctuations of at least one sensor (101-107) of a sensor tile (12);
b) the position of the sensor tile (12) in the process installation (1),
and/or
c) a function of the sensor tile (12),
wherein the function comprises a measurement that is continuous or can be switched off intermittently,
**characterized in that** the first sensor tile (12) has at least three operating states,
wherein a first operating state is used to monitor a change of the physical or chemical variable of the medium (3) and/or the process characteristic of the medium (3) located in the process installation (1) and/or the state of the process installation (1),
wherein a second operating state is used to determine the physical or chemical variable of the medium (3) and/or the process characteristic of the medium (3) located in the process installation (1) and/or the state of the process installation (1),
wherein a third operating state is used to receive and process data of multiple sensor tiles (12),
wherein the three operating states are switched by assigning a measuring function, a monitoring function for a change of state to start sensors from a standby mode and an evaluation function of measured values of multiple sensor tiles (12) of the first sensor tile (12) within the sensor arrangement (18),
wherein the assignment of the measuring function, the monitoring function and the evaluation function of the first sensor tile (12) can be changed by the sensor arrangement (18) while the process installation (1) is in operation,
wherein the assignment of the measuring function, the monitoring function and the evaluation function is performed using the position of the first sensor tile (12), depending on a frequency of changes in the state of the process installation (1) at the position of the first sensor tile (12), a temperature of the medium and/or a flow of the medium, wherein the sensor arrangement has self-administration.

2. Sensor arrangement as claimed in Claim 1, **characterized in that** each of the sensor tiles (12) has a control and/or evaluation unit (100) with at least a transmission and reception module for data exchange with the control and/or evaluation units (100) of the other sensor tiles (12) of the sensor arrangement (18).

3. Sensor arrangement as claimed in Claim 1 or 2, **characterized in that** multiple different sensors (101-107) are provided on the sensor tile (12), wherein said sensors serve to determine different physical or chemical variables of the medium (3) and/or a different process characteristics of the medium (3) located in the process installation (1) and/or different state variables of the process installation (1).

4. Sensor arrangement as claimed in one of the previous claims, **characterized in that** multiple sensors (101-105) of the same type are arranged one after the other on a sensor tile (12) in a sensor field in the flow direction or filling direction of the medium (3).

5. Process installation (1) with a sensor arrangement (18) as claimed in one of the Claims 1 to 4.

6. Process installation (1) as claimed in Claim 5, **characterized in that** in addition to the sensor arrangement (18) the process installation further contains one or more other sensors, wherein a data exchange takes place between the sensor arrangement (18) and these other sensors.

7. Process installation (1) as claimed in one of the previous Claims 5 to 6, **characterized in that** the process installation (1) has a means of regulation wherein data exchange regarding the state of the means of regulation takes place with the sensor arrangement (18) so that the means of regulation is controlled depending on the exchanged data.

## Revendications

1. Arrangement de capteurs (18) destiné à être disposé sur une installation de process (1) avec plusieurs points de mesure, comprenant une pluralité de carreaux de capteurs (12),
un carreau de capteurs (12) présentant respectivement un corps de support pouvant être disposé localement sur l'installation de process (1) et plusieurs capteurs (101-107) disposés sur le corps de support pour la détermination de différentes valeurs caractéristiques,
un premier des carreaux de capteurs (12) présentant une première unité de commande et/ou d'exploitation (100) avec au moins un module d'émission et de réception destiné à l'échange de données avec une première unité de commande et/ou d'exploitation (100) d'un deuxième carreau de capteurs (12),
un échange de données ayant lieu entre le premier et le deuxième carreau de capteurs (12),
la première unité de commande et/ou d'exploitation (100) du premier carreau de capteurs (12) étant conçue pour déterminer une grandeur physique ou chimique du produit (3) et/ou la caractéristique de process du produit (3) se trouvant dans l'installation de process (1) et/ou un état de l'installation de process (1) par une pondération des valeurs caractéristiques déterminées par chaque carreau de capteurs (12),
la pondération étant déterminée en fonction
a) des fluctuations des valeurs mesurées d'au moins un capteur (101-107) d'un carreau de capteurs (12) ;
b) de la position du carreau de capteurs (12) dans l'installation de process (1),
et/ou
c) d'une fonction du carreau de capteurs (12),
la fonction comprenant une mesure continue ou temporairement arrêtée,
**caractérisé en ce que** le premier carreau de capteurs (12) présente au moins trois états de fonctionnement,
un premier état de fonctionnement servant à la surveillance concernant une modification de la grandeur physique ou chimique du produit (3) et/ou de la caractéristique de process du produit (3) se trouvant dans l'installation de process (1) et/ou d'un état de l'installation de process (1),
un deuxième état de fonctionnement servant à déterminer la grandeur physique ou chimique du produit (3) et/ou la caractéristique de process du produit (3) se trouvant dans l'installation de process (1) et/ou l'état de l'installation de process (1),
un troisième état de fonctionnement servant à recevoir et à traiter des données de plusieurs carreaux de capteurs (12),
la commutation des trois états de fonctionnement s'effectuant par une attribution d'une fonction de mesure, d'une fonction de surveillance d'un changement d'état pour le démarrage de capteurs à partir d'un mode d'attente et d'une fonction d'évaluation de valeurs mesurées de plusieurs carreaux de capteurs (12) du premier carreau de capteurs (12) à l'intérieur de l'arrangement de capteurs (18),
l'attribution de la fonction de mesure, de la fonction de surveillance et de la fonction d'évaluation du premier carreau de capteurs (12) pouvant être modifiée par l'arrangement de capteurs (18) pendant le fonctionnement de l'installation de process (1),
l'attribution de la fonction de mesure, de la fonction de surveillance et de la fonction d'évaluation s'effectuant à l'aide de la position du premier carreau de capteurs (12), en fonction d'une fréquence de changements d'état de l'installation de process (1) à la position du premier carreau de capteurs (12), d'une température du produit et/ou d'un débit du produit, l'arrangement de capteurs présentant une autogestion.

2. Arrangement de capteurs selon la revendication 1, **caractérisé en ce que** chacun des carreaux de capteurs (12) présente une unité de commande et/ou d'exploitation (100) avec au moins un module d'émission et de réception destiné à l'échange de données avec les unités de commande et/ou d'exploitation (100) des autres carreaux de capteurs (12) de l'arrangement de capteurs (18).

3. Arrangement de capteurs selon la revendication 1 ou 2, **caractérisé en ce que** plusieurs capteurs différents (101-107) sont prévus sur le carreau de capteur (12), lesquels capteurs servent à déterminer différentes grandeurs physiques ou chimiques du produit (3) et/ou différentes caractéristiques de process du produit (3) se trouvant dans l'installation de process (1) et/ou différentes grandeurs d'état de l'installation de process (1).

4. Arrangement de capteurs selon l'une des revendications précédentes, **caractérisé en ce que** plusieurs capteurs (101-105) de même type sont disposés les uns derrière les autres sur un carreau de capteurs (12) dans un champ de capteurs dans la direction d'écoulement ou la direction de remplissage du produit (3).

5. Installation de process (1) avec un arrangement de capteurs (18) selon l'une des revendications 1 à 4.

6. Installation de process (1) selon la revendication 5, **caractérisée en ce que** l'installation de process contient, en plus de l'arrangement de capteurs (18), un ou plusieurs autres capteurs, un échange de données ayant lieu entre l'arrangement de capteurs (18) et ces autres capteurs.

7. Installation de process (1) selon l'une des revendication précédentes 5 à 6, **caractérisé en ce que** l'installation de process (1) présente des moyens de réglage, un échange de données concernant l'état des moyens de réglage ayant lieu avec l'arrangement de capteurs (18), de sorte qu'une commande des moyens de réglage a lieu en fonction des données échangées.
